# EUROPEAN PATENT SPECIFICATION

(11) **EP 2 921 963 B1**
(45) Date of publication and mention of the grant of the patent: **02.12.2020**
(21) Application number: 14753914.2
(22) Date of filing: 13.01.2014
(51) Int. Cl.: G06F 12/02

(54) **MEMORY RECYCLING METHOD AND DEVICE**
SPEICHERRECYCLINGVERFAHREN UND -VORRICHTUNG
MÉTHODE ET DISPOSITIF DE RECYCLAGE DE MÉMOIRE

(30) Priority: 22.02.2013 CN 201310057351
(43) Date of publication of application: 23.09.2015
(73) Proprietor: Huawei Technologies Co., Ltd., Longgang District Shenzhen, Guangdong 518129 (CN)
(72) Inventor: XIA, Fei, Beijing 100190 (CN); JIANG, Dejun, Beijing 100190 (CN); WEI, Wei, Beijing 100190 (CN); XIONG, Jin, Beijing 100190 (CN)
(74) Representative: Gill Jennings & Every LLP
(86) International application number: PCT/CN2014/070515
(87) International publication number: WO 2014/127684

(56) References cited:
- CN-A- 101 231 619
- CN-A- 101 833 512
- CN-A- 102 508 783
- CN-A- 102 880 555
- US-A1- 2011 029 715
- US-A1- 2011 055 458
- US-A1- 2011 283 049

## Description

### TECHNICAL FIELD

Embodiments of the present invention relate to the field of computer technologies, and in particular, to a memory reclamation method and apparatus.

### BACKGROUND

Memory devices constituting a memory unit generally include a dynamic random access memory (Dynamic Random Access Memory, DRAM for short) and a non-volatile memory (Non-Volatile Memory, NVM for short). A quantity of write times which can be borne by the DRAM is large, but an integration level is small, and storage space which can be integrated is limited. An integration level of the NVM is higher, and the NVM can integrate a memory chip having a large memory capacity, but the quantity of write times which can be borne by the NVM is relatively low. As people have increasingly higher requirements on a memory capacity of a storage device, and expect the memory capacity of the storage device to be larger, more stable, and more reliable, a memory unit in a mixed structure including a DRAM and an NVM emerges, which can improve the storage capacity of the storage device by using the DRAM and the NVM together.

In the prior art, when an operating system of a storage device in a mixed structure of a DRAM and an NVM performs a page reclaiming operation, the least recently used (Least Recently Used, LRU for short) algorithm is used to select a corresponding quantity of pages from heads of linked lists of inactive NVM pages for reclamation. Such a method may cause an NVM page having a large quantity of write times to be reclaimed first, and consequently, the NVM page having a large quantity of write times is severely worn out, and stability and reliability of an entire storage unit are affected.

US 2011/283049 A1 relates to a system and method for managing garbage collection in solid-state memory. The system and methods are directed to optimizing the selection of memory blocks for garbage collection to maximize the amount of memory freed by garbage collection operations. The systems and methods provide for the efficient selection of optimal or near-optimal garbage collection candidate blocks, with the most optimal selection defined as block(s) with the most invalid pages. In one embodiment, a controller classifies memory blocks into various invalid block pools by the amount of invalid pages each block contains. When garbage collection is performed, the controller selects a block from a non-empty pool of blocks with the highest minimum amount of invalid pages. The pools facilitate the optimal or near-optimal selection of garbage collection candidate blocks in an efficient manner and the data structure of the pools can be implemented with bitmasks, which take minimal space in memory.

US 2011/0055458 A1 describes page based management of an array of Flash RAM nonvolatile memory devices providing paged base reading and writing and block erasure of a flash storage system.

US2011/0029715 A1 describes a memory management system and method for managing memory blocks of a memory device of a computer.

### SUMMARY

An objective of embodiments of the present invention is to provide a memory reclamation method and apparatus, which aims to solve a problem of unbalanced wear of memory pages of an NVM

The invention is set out in the appended set of claims. Advantageous embodiments are defined by the appended dependent claims.

According to a first example there is provided a memory reclamation method, including:
receiving a memory reclamation request message, where the memory reclamation request message includes a reclamation identifier, and the reclamation identifier is used to indicate a quantity of memory pages requested to be reclaimed;
reclaiming inactive memory pages of a non-volatile memory (NVM) according to the reclamation identifier in ascending order of write times of inactive memory pages of the NVM; and before the reclaiming inactive memory pages of an NVM according to the reclamation identifier in ascending order of the write times of inactive memory pages of the NVM, the method further includes:
   determining the write times of inactive memory pages of the NVM; and
   storing the inactive memory pages of the NVM into a corresponding segment of a linked list of the inactive memory pages according to the write times of inactive memory pages of the NVM, where the linked list of the inactive memory pages includes multiple segments, and each segment is used to store an inactive memory page of the NVM within a set range of the write times. With reference to the first aspect, in a first possible implementation manner of the first aspect, the multiple segments included in the linked list of the inactive memory pages are sorted in the linked list of the inactive memory pages in ascending order of corresponding set ranges of the write times. With reference to the first aspect or the first possible implementation manner of the first aspect, in a second possible implementation manner of the first aspect, the reclaiming inactive memory pages of an NVM according to the reclamation identifier in ascending order of the write times of inactive memory pages of the NVM includes:
   reclaiming, in the linked list of the inactive memory pages and in ascending order of the set ranges of the write times, inactive memory pages of the NVM that are in one or multiple segments and in a quantity that matches the quantity of the memory pages requested to be reclaimed by the reclamation identifier.

In some developments, before the reclaiming inactive memory pages of an NVM according to the reclamation identifier in ascending order of the write times of inactive memory pages of the NVM, the method further includes:
determining the write times of inactive memory pages of the NVM; and
storing the inactive memory pages of the NVM into a last page group in a linked list of the inactive memory pages, where the linked list includes multiple page groups, and each page group includes a set quantity of inactive memory pages of the NVM that are sorted in ascending order of the write times.

In some developments, the multiple page groups included in the linked list of the inactive memory pages are sorted in the linked list of the inactive memory pages in order of establishment time.

In some developments, the reclaiming inactive memory pages of an NVM according to the reclamation identifier in ascending order of the write times of inactive memory pages of the NVM includes:
reclaiming, in the linked list of the inactive memory pages and in order of the establishment time, inactive memory pages of the NVM that are in one or multiple page groups and in a quantity that matches the quantity of the memory pages requested to be reclaimed by the reclamation identifier.

According to a second example there is provided a memory reclamation apparatus, including:
a receiving module, configured to receive a memory reclamation request message, where the memory reclamation request message includes a reclamation identifier, and the reclamation identifier is used to indicate a quantity of memory pages requested to be reclaimed;
a memory reclamation module, configured to reclaim inactive memory pages of a non-volatile memory (NVM) according to the reclamation identifier in ascending order of the write times of inactive memory pages of the NVM; and
a determining module, configured to: before the memory reclamation module reclaims the inactive memory pages of the NVM according to the reclamation identifier in ascending order of the writes times of the inactive memory pages of the NVM, determine the write times of inactive memory pages of the NVM; and
a first inserting module, configured to store the inactive memory pages of the NVM into a corresponding segment of a linked list of the inactive memory pages according to the write times of inactive memory pages of the NVM, where the linked list of the inactive memory pages includes multiple segments, and each segment is used to store an inactive memory page of the NVM within a set range of the write times.

Optionally the multiple segments included in the linked list of the inactive memory pages are sorted in the linked list of the inactive memory pages in ascending order of corresponding set ranges of the write times.

Optionally
the memory reclamation module is specifically configured to reclaim, in the linked list of the inactive memory pages and in ascending order of the set ranges of the write times, inactive memory pages of the NVM that are in one or multiple segments and in a quantity that matches the quantity of the memory pages requested to be reclaimed by the reclamation identifier.

In some developments, the apparatus further includes:
a determining module, configured to: before the memory reclamation module reclaims the inactive memory pages of the NVM according to the reclamation identifier in ascending order of the writes times of the inactive memory pages of the NVM, determine the write times of inactive memory pages of the NVM; and
a second inserting module, configured to store the inactive memory pages of the NVM into a last page group in a linked list of the inactive memory pages, where the linked list includes multiple page groups, and each page group includes a set quantity of inactive memory pages of the NVM that are sorted in ascending order of the write times.

In some developments, the multiple page groups included in the linked list of the inactive memory pages are sorted in the linked list of the inactive memory pages in order of establishment time.

In some developments, the memory reclamation module is specifically configured to reclaim, in the linked list of the inactive memory pages and in order of the establishment time, inactive memory pages of the NVM that are in one or multiple page groups and in a quantity that matches the quantity of the memory pages requested to be reclaimed by the reclamation identifier.

According to the memory reclamation method and apparatus in this embodiment, a memory reclamation request message is received, where the memory reclamation request message includes a reclamation identifier, and the reclamation identifier is used to indicate the quantity of memory pages requested to be reclaimed, and inactive memory pages of an NVM are reclaimed according to the reclamation identifier in ascending order of the write times of inactive memory pages of the NVM. In this way, a page having a relatively small quantity of write times among the inactive memory pages of the NVM is reclaimed first, and a page having a relatively large quantity of write times among the inactive memory pages of the NVM is reclaimed later. Therefore, wear leveling of the NVM is achieved, and the stability and reliability of a storage unit is improved.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of Embodiment 1 of a memory reclamation method according to the present invention;
FIG. 2 is a schematic diagram of Embodiment 1 of an organizational form of a linked list of inactive memory pages of an NVM according to the present invention;
FIG. 3 is a flowchart of Embodiment 2 of a memory reclamation method according to the present invention;
FIG. 4 is a schematic diagram of Embodiment 2 of an organizational form of a linked list of inactive memory pages of an NVM according to the present invention;
FIG. 5 is a flowchart of Embodiment 3 of a memory reclamation method according to the present invention; and
FIG. 6 is a structural diagram of Embodiment 1 of a memory reclamation apparatus according to the present invention.

### DESCRIPTION OF EMBODIMENTS

To make the objectives, technical solutions, and advantages of the present invention clearer, the following clearly and completely describes the technical solutions in the present invention with reference to the accompanying drawings in the present invention. Apparently, the described embodiments are a part rather than all of the embodiments of the present invention. All other embodiments obtained by persons of ordinary skill in the art based on the embodiments of the present invention without creative efforts shall fall within the protection scope of the present invention.

It should be noted that, a memory reclamation method in the embodiments of the present invention can be applied to a memory reclamation apparatus having a mixed-type memory module, that is, the memory module of the memory reclamation apparatus includes a dynamic random access memory (Dynamic Random Access Memory, DRAM for short) and a non-volatile memory (Non-Volatile Memory, NVM for short); and can be further applied to a memory reclamation apparatus having a memory module including an NVM. For the memory reclamation apparatus having a mixed-type memory module, when memory reclamation is performed, an inactive memory page in the DRAM can be reclaimed first; when the quantity of the inactive memory pages in the DRAM cannot meet reclamation requirements, a memory page in the NVM is then reclaimed. The memory reclamation method according to the embodiments of the present invention can be used as a method for reclaiming the memory page in the NVM.

The memory reclamation method in this embodiment can be implemented by using the memory reclamation apparatus, where the memory reclamation apparatus can be implemented in a manner of hardware or software. The memory reclamation apparatus may generally be a component, for example, a CPU, which has a processing function and is in a terminal device such as a mobile phone or a computer, and the component can be configured to implement the memory reclamation method in the terminal device.

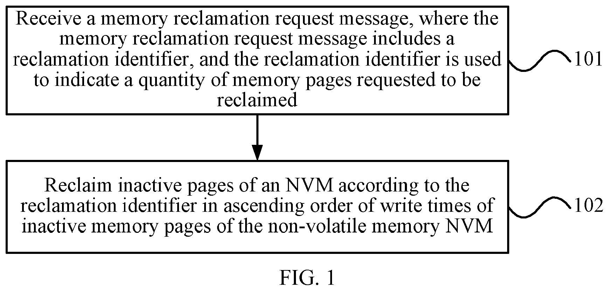

FIG. 1 is a flowchart of Embodiment 1 of a memory reclamation method according to the present invention. As shown in FIG. 1, the memory reclamation method in this embodiment includes: S101: Receive a memory reclamation request message, where the memory reclamation request message includes a reclamation identifier, and the reclamation identifier is used to indicate a quantity of memory pages requested to be reclaimed.

Specifically, for example, when running a program, a memory reclamation apparatus needs to allocate memory space to a process; in this case, if idle memory is insufficient, an operating system sends the memory reclamation request message to a memory management module, and the memory management module receives the memory reclamation request message, where the memory reclamation request message includes the reclamation identifier, and the reclamation identifier can be an identifier used to indicate the quantity of memory pages requested by the operating system, that is, the operating system requests the memory management module to allocate memory pages, where the quantity of the memory pages is identified by the reclamation identifier; the memory management module reclaims a corresponding quantity of the memory pages in a linked list of inactive memory pages of an NVM according to the memory reclamation request message, to meet requirements of the operating system.

S102: Reclaim inactive memory pages of a non-volatile memory (NVM) according to the reclamation identifier in ascending order of the write times of inactive memory pages of the NVM.

Specifically, the memory management module successively reclaims inactive memory pages according to the write times of the inactive memory pages in the linked list of the inactive memory pages of the NVM and in ascending order of the write times of the inactive memory pages, where the quantity of the inactive memory pages is corresponding to the reclamation identifier. In this way, an inactive memory page, having a small quantity of write times, in the linked list of the inactive memory pages of the NVM is reclaimed first. If the quantity of write times of the reclaimed inactive memory page is still small during next reclamation, the inactive memory page having a small quantity of write times is still reclaimed. In this way, in a process of memory page reclamation, the inactive memory page having a small quantity of write times is always reclaimed first, thereby avoiding affecting stability and reliability of an entire memory module because the memory module of the memory reclamation apparatus is damaged first due to a large quantity of write times of some memory pages, and improving wear balance of the memory pages of the NVM.

According to the memory reclamation method in this embodiment of the present invention, a memory reclamation request message is received, where the memory reclamation request message includes a reclamation identifier, and the reclamation identifier is used to indicate the quantity of memory pages requested to be reclaimed, and inactive memory pages of an NVM are reclaimed according to the reclamation identifier in ascending order of the write times of inactive memory pages of the NVM. In this way, a page having a relatively small quantity of write times among the inactive memory pages of the NVM is reclaimed first, and a page having a relatively large quantity of write times among the inactive memory pages of the NVM is reclaimed later. Therefore, wear leveling of the NVM is achieved, and the stability and reliability of a storage unit is improved.

Based on the foregoing embodiment, further, before the reclaiming inactive memory pages of an NVM according to the reclamation identifier in ascending order of the write times of inactive memory pages of the NVM, the method further includes: determining the write times of inactive memory pages of the NVM; and storing the inactive memory pages of the NVM into a corresponding segment of the linked list of the inactive memory pages according to the write times of inactive memory pages of the NVM, where the linked list of the inactive memory pages includes multiple segments, and each segment is used to store an inactive memory page of the NVM within a set range of the write times.

Specifically, before reclaiming the inactive memory pages of the NVM according to the reclamation identifier in ascending order of the writes times of the inactive memory pages of the NVM, the memory management module may further first determine the write times of inactive memory pages of the NVM, for example, the memory management module can acquire, according to the write times of inactive memory pages of the NVM and that is recorded in a memory controller cache, the write times of the inactive memory pages, and if the memory controller cache does not have any record about the write times of the corresponding inactive memory pages, the write times of the corresponding inactive memory pages can be further acquired from a counter of the NVM. By disposing the memory controller cache in a memory controller, the recording the write times of the inactive memory pages in the memory controller cache can reduce the quantity of access times of the NVM. The memory management module may further periodically refresh, into the counter of the NVM, the write times of the inactive memory pages that are recorded in the memory controller cache, and the write times of all memory pages in the NVM are recorded in the counter of the NVM.

Based on the foregoing embodiment, further, the multiple segments included in the linked list of the inactive memory pages are sorted in the linked list of the inactive memory pages in ascending order of corresponding set ranges of the write times.

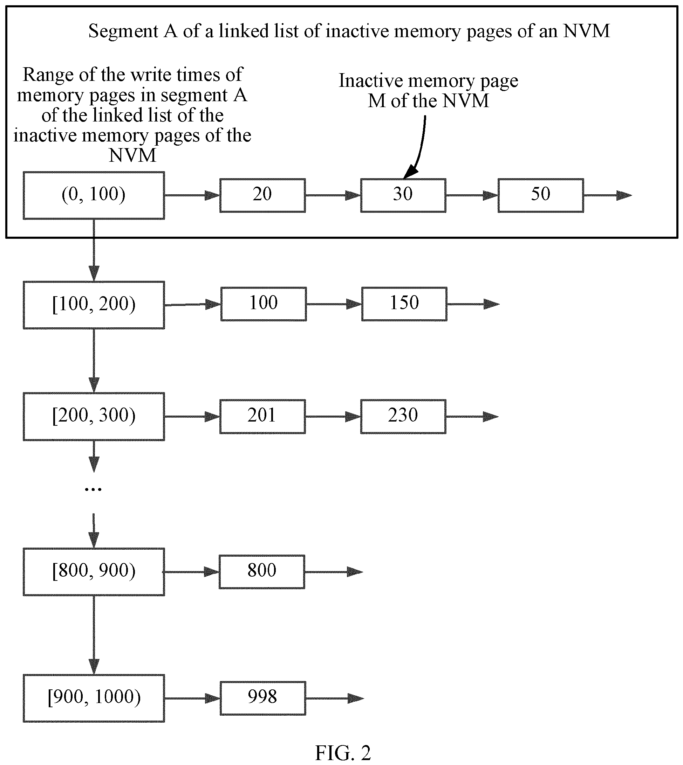

Specifically, FIG. 2 is a schematic diagram of Embodiment 1 of an organizational form of a linked list of inactive memory pages of an NVM according to the present invention. As shown in FIG. 2, the linked list of the inactive memory pages of the NVM includes multiple segments of the linked list of the inactive memory pages of the NVM, and a head of each segment of the linked list of the inactive memory pages of the NVM includes a numerical value range, where the numerical value range indicates a range of the write times of all memory pages in the segment, for example, the write times of all memory pages in segment A of the linked list of the inactive memory pages of the NVM range from 0 to 100, and all memory pages having the write times ranging from 0 to 100 in segment A of the linked list of the inactive memory pages of the NVM are sorted in the linked list in ascending order of the write times.

When a new inactive memory page of the NVM is moved into the linked list of the inactive memory pages of the NVM, it is known by determining that the quantity of write times of to-be-inserted inactive memory page M of the NVM is 30, and inactive memory page M of the NVM is inserted into segment A of the linked list of the inactive memory pages of the NVM having the write times ranging from 0 to 100, and specifically inserted between inactive memory pages having the write times of 20 and 50, of segment A of the linked list, so that after insertion, the memory pages in segment A of the linked list are still sorted in ascending order of the write times, which therefore can ensure that, when pages are reclaimed, pages in the linked list of the inactive memory pages of the NVM can be always reclaimed in ascending order of the write times.

Based on the foregoing embodiment, further, the reclaiming inactive memory pages of an NVM according to the reclamation identifier in ascending order of the write times of inactive memory pages of the NVM includes: reclaiming, in the linked list of the inactive memory pages and in ascending order of the set ranges of the write times, inactive memory pages of the NVM that are in one or multiple segments and in a quantity that matches the quantity of the memory pages requested to be reclaimed by the reclamation identifier.

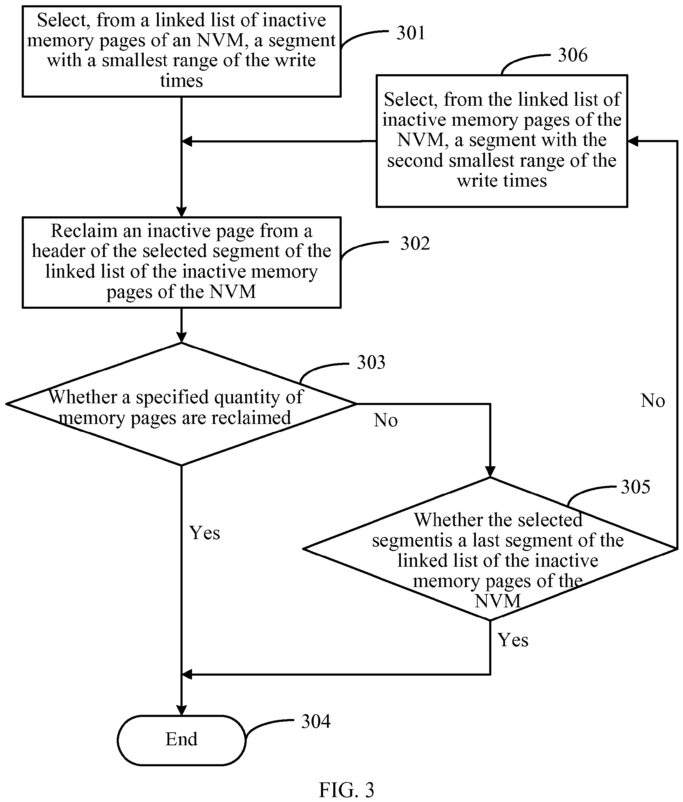

Specifically, FIG. 3 is a flowchart of Embodiment 2 of a memory reclamation method according to the present invention. As shown in FIG. 3, according to the memory reclamation method provided in this embodiment, a linked list of inactive memory pages can be divided into and include multiple segments, each segment is used to store an inactive memory page of an NVM within a set range of the write times, and the multiple segments included in the linked list of the inactive memory pages are sorted in the linked list of the inactive memory pages in ascending order of corresponding set ranges of the write times; a memory management module can reclaim the inactive memory pages of the NVM according to the following steps:
301: Select, from a linked list of inactive memory pages of an NVM, a segment having a smallest range of write times.

The memory management module selects, from the linked list of the inactive memory pages of the NVM, the segment of the linked list of the inactive memory pages of the NVM that is in the linked list of the inactive memory pages of the NVM and has a smallest range of write times.

302: Reclaim an inactive memory page from a head of the selected segment of the linked list of the inactive memory pages of the NVM.

Starting from the head of the selected segment of the linked list of the inactive memory pages, a specified quantity of memory pages are selected in ascending order of the write times of the inactive memory pages, and the selected memory pages are reclaimed, so that the reclaimed memory pages become idle pages and therefore can be reused, where the specified quantity can be set by an operating system.

303: Determine whether a specified quantity of memory pages are reclaimed, and if a specified quantity of memory pages are reclaimed, perform 304; if a specified quantity of memory pages are not reclaimed, perform 305.

If the quantity of the selected memory pages can meet requirements of the operating system, this memory reclamation operation is completed; if the quantity of the selected memory pages does not meet requirements of the operating system, a memory page is reclaimed from another segment in the linked list of the inactive memory pages of the NVM.

304: End.

305: Determine whether the segment selected in 301 is a last segment of the linked list of the inactive memory pages of the NVM, and if the segment selected in 301is the last segment of the linked list of the inactive memory pages of the NVM, perform 304; if the segment selected in 301is not the last segment of the linked list of the inactive memory pages of the NVM, perform 306.

If the selected segment of the linked list of the inactive memory pages of the NVM in the foregoing 301 is the last linked list segment of the linked list of the inactive memory pages of the NVM, this memory reclamation operation is completed; if the selected segment of the linked list of the inactive memory pages of the NVM in the foregoing 301 is not the last segment of the linked list of the inactive memory pages of the NVM, a memory page is reclaimed from another segment in the linked list of the inactive memory pages of the NVM.

306: Select, from the linked list of the inactive memory pages of the NVM, a segment having a second smallest range of the write times.

From the linked list of the inactive memory pages of the NVM, a segment that has a range of write times smaller than and approximate to that of the segment selected in the foregoing 301 was selected, and then 302 is performed.

Optionally, based on Embodiment 1 of the memory reclamation method, before the reclaiming inactive memory pages of the NVM according to the reclamation identifier in ascending order of the write times of inactive memory pages of the NVM, the memory reclamation method in this embodiment further includes: determining the write times of inactive memory pages of the NVM; and storing the inactive memory pages of the NVM into a last page group in the linked list of the inactive memory pages, where the linked list includes multiple page groups, and each page group includes a set quantity of inactive memory pages of the NVM that are sorted in ascending order of the write times.

Specifically, before the reclaiming inactive memory pages of the NVM according to the reclamation identifier in ascending order of the writes times of the inactive memory pages of the NVM, the memory management module can further first determine the write times of inactive memory pages of the NVM, and a specific process of determining the write times of inactive memory pages of the NVM is the same as that in the foregoing embodiment, which is not described herein again.

The memory management module may further store the inactive memory pages of the NVM into a last page group in the linked list of the inactive memory pages, where the linked list includes multiple page groups, and each page group includes a set quantity of inactive memory pages of the NVM that are sorted in ascending order of the write times.

Based on the foregoing embodiment, further, the multiple page groups included in the linked list of the inactive memory pages are sorted in the linked list of the inactive memory pages in order of establishment time.

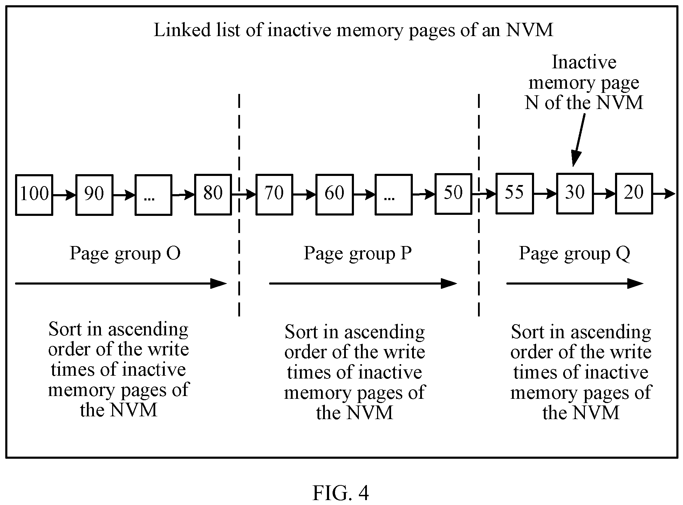

Specifically, FIG. 4 is a schematic diagram of Embodiment 2 of an organizational form of a linked list of inactive memory pages of an NVM according to the present invention. As shown in FIG. 4, the linked list of the inactive memory pages of the NVM includes multiple page groups, each page group is sorted in the page linked list in order of establishment time, for example, time when a set quantity of inactive memory pages of the NVM that are included in page group O are inserted into the linked list is relatively earlier than time when a set quantity of inactive memory pages of the NVM that are included in page group P are inserted into the linked list; the time when the set quantity of the inactive memory pages of the NVM that are included in page group P are inserted into the linked list is relatively earlier than time when a set quantity of inactive memory pages of the NVM that are included in page group Q are inserted into the linked list.

The inactive memory pages of the NVM of the set quantities included in page group O, page group P, and page group Q are successively sorted in ascending order of the write times of the inactive memory pages. When new inactive memory page N of the NVM is moved into the linked list of the inactive memory pages, it is known by determining that the write times of to-be-inserted inactive memory page N of the NVM are 30, inactive memory page N of the NVM is inserted into page group Q at a tail of the linked list of the inactive memory pages of the NVM, and specifically inserted between inactive memory pages of page group Q having the write times of 55 and 20, so that after insertion, memory pages in a segment A of the linked list are still sorted in ascending order of the write times. In this way, it can be ensured that pages in a page group can be always reclaimed in ascending order of write times during page reclamation.

Based on the foregoing embodiment, further, the reclaiming inactive memory pages of an NVM according to the reclamation identifier in ascending order of the write times of inactive memory pages of the NVM includes: reclaiming, in the linked list of the inactive memory pages and in order of establishment time, inactive memory pages of the NVM that are in one or multiple page groups and in a quantity that matches the quantity of memory pages requested to be reclaimed by the reclamation identifier.

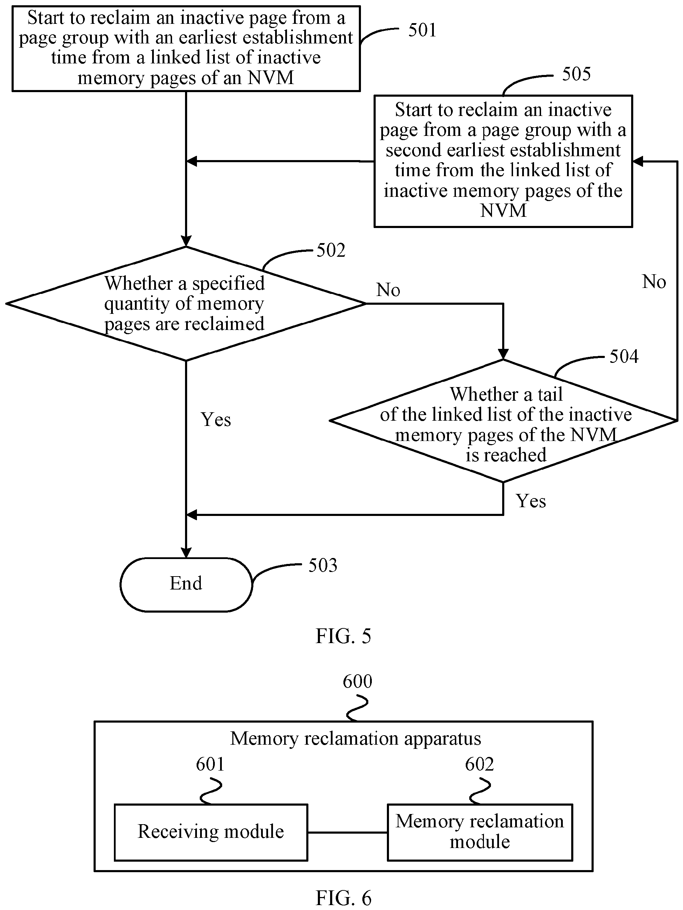

Specifically, FIG. 5 is a flowchart of Embodiment 3 of a memory reclamation method according to the present invention. As shown in FIG. 5, according to the memory reclamation method provided in this embodiment, the linked list may include multiple page groups, each page group includes a set quantity of inactive memory pages of an NVM that are sorted in ascending order of the write times, and the multiple page groups included in a page linked list are sorted in the page linked list in order of establishment time. A memory management module can reclaim the inactive memory pages of the NVM according to the following steps:
501: Start to reclaim an inactive memory page from a page group whose establishment time is the earliest from a linked list of inactive memory pages of an NVM.

A memory management module selects, in ascending order of the write times of the inactive memory pages and from a head of a segment of the linked list of the inactive memory pages of the NVM, a specified quantity of memory pages, and reclaims the selected memory pages, so that the reclaimed memory pages become idle pages and therefore can be reused, where the specified quantity can be determined according to requirements of an operating system.

502: Determine whether a specified quantity of memory pages are reclaimed.

If the quantity of the selected memory pages can meet the requirements of the operating system, this memory reclamation operation is completed; if the quantity of the selected memory pages does not meet the requirements of the operating system, a memory page is reclaimed from another page group in the linked list of the inactive memory pages of the NVM.

503: End.

504: Determine whether a tail of the linked list of the inactive memory pages of the NVM is reached.

If the tail of the linked list of the inactive memory pages of the NVM is reached, this memory reclamation operation is completed; if the tail portion of the linked list of the inactive memory pages of the NVM is not reached, a memory page is reclaimed from another page group in the linked list of the inactive memory pages of the NVM.

505: Start to reclaim an inactive memory page from a page group whose establishment time is the second earliest from the linked list of inactive memory pages of the NVM.

A page group whose establishment time is later than and close to the establishment time of the page group selected in the foregoing 501 and that is in the linked list of the inactive memory pages of the NVM is selected, and memory pages are reclaimed from the selected page group in ascending order of the write times of the inactive memory pages, until the quantity of the reclaimed memory pages meets the requirements of the operating system.

It can be understood by persons of ordinary skill in the art that, all or a part of the steps for implementing the foregoing method embodiments may be implemented by a program instructing relevant hardware. The program may be stored in a computer readable storage medium. When the program is run, the steps including the method embodiments are performed. The storage medium may be any medium that is capable of storing program code, such as a ROM, a RAM, a magnetic disk, or an optical disc.

FIG. 6 is a structural diagram of Embodiment 1 of a memory reclamation apparatus according to the present invention. As shown in FIG. 6, the memory reclamation apparatus 600 in this embodiment includes: a receiving module 601 and a memory reclamation module 602, where,
the receiving module 601 is configured to receive a memory reclamation request message, where the memory reclamation request message includes a reclamation identifier, and the reclamation identifier is used to indicate a quantity of memory pages requested to be reclaimed; and
the memory reclamation module 602 is configured to reclaim inactive memory pages of a non-volatile memory (NVM) according to the reclamation identifier in ascending order of the write times of inactive memory pages of the NVM.

The memory reclamation apparatus in this embodiment can be configured to perform the memory reclamation method in Embodiment 1 of the memory reclamation method. For a specific performing process, reference may be made to Embodiment 1 of the memory reclamation method, and details are not described herein again.

According to the memory reclamation apparatus in this embodiment, a receiving module receives a memory reclamation request message, where the memory reclamation request message includes a reclamation identifier, and the reclamation identifier is used to indicate the quantity of memory pages requested to be reclaimed, and a memory reclamation module reclaims inactive memory pages of an NVM according to the reclamation identifier in ascending order of the write times of inactive memory pages of the NVM, achieving that a page having a relatively small quantity of write times among the inactive memory pages of the NVM is reclaimed first, and a page having a relatively large quantity of write times among the inactive memory pages of the NVM is reclaimed later. Therefore, wear leveling of the NVM is achieved, and the stability and reliability of a storage unit is improved.

Based on the foregoing embodiment, further, the memory reclamation apparatus 600 may further include: a determining module and a first inserting module, where,
the determining module may be configured to: before the memory reclamation module reclaims the inactive memory pages of the NVM according to the reclamation identifier in ascending order of the writes times of the inactive memory pages of the NVM, determine the write times of inactive memory pages of the NVM; and
the first inserting module may be configured to store the inactive memory pages of the NVM into a corresponding segment of a linked list of the inactive memory pages according to the write times of inactive memory pages of the NVM, where the linked list of the inactive memory pages includes multiple segments, and each segment is used to store an inactive memory page of the NVM within a set range of the write times.

Based on the foregoing embodiment, further, the multiple segments included in the linked list of the inactive memory pages are sorted in the linked list of the inactive memory pages in ascending order of corresponding set ranges of the write times.

Based on the foregoing embodiment, further, the memory reclamation module may be specifically configured to reclaim, in the linked list of the inactive memory pages and in ascending order of the set ranges of the write times, inactive memory pages of the NVM that are in one or multiple segments and in a quantity that matches the quantity of the memory pages requested to be reclaimed by the reclamation identifier.

Optionally, based on the Embodiment 1 of the memory reclamation apparatus, the memory reclamation apparatus 600 may further include: a determining module and a second inserting module, where,
the determining module may be configured to: before the memory reclamation module reclaims the inactive memory pages of the NVM according to the reclamation identifier in ascending order of the writes times of the inactive memory pages of the NVM, determine the write times of inactive memory pages of the NVM; and
the second inserting module may be configured to store the inactive memory pages of the NVM into a last page group in a linked list of inactive memory pages, where the linked list includes multiple page groups, and each page group includes a set quantity of inactive memory pages of the NVM that are sorted in ascending order of the write times.

Based on the foregoing embodiment, further, the multiple page groups included in the linked list of the inactive memory pages are sorted in the linked list of the inactive memory pages in order of establishment time.

Based on the foregoing embodiment, further, the memory reclamation module may be specifically configured to reclaim, in the linked list of the inactive memory pages and in order of the establishment time, inactive memory pages of the NVM that are in one or multiple page groups and in a quantity that matches the quantity of the memory pages requested to be reclaimed by the reclamation identifier.

## Claims

1. A memory reclamation method, comprising:
receiving (101) a memory reclamation request message, wherein the memory reclamation request message comprises a reclamation identifier, and the reclamation identifier is used to indicate a quantity of memory pages requested to be reclaimed;
**characterised in that** the method further comprises:
reclaiming (102) inactive memory pages of a non-volatile memory, NVM, according to the reclamation identifier in ascending order of write times of inactive memory pages of the NVM
before the reclaiming (102) inactive memory pages of an NVM according to the reclamation identifier in ascending order of the write times of inactive memory pages of the NVM,
determining the write times of inactive memory pages of the NVM; and
storing the inactive memory pages of the NVM into a corresponding segment of a linked list of the inactive memory pages according to the write times of inactive memory pages of the NVM, wherein the linked list of the inactive memory pages comprises multiple segments, and each segment is used to store an inactive memory page of the NVM within a set range of the write times;
wherein the multiple segments comprised in the linked list of the inactive memory pages are sorted in the linked list of the inactive memory pages in ascending order of corresponding set ranges of the write times; and
wherein the reclaiming (102) inactive memory pages of an NVM according to the reclamation identifier in ascending order of the write times of inactive memory pages of the NVM comprises:
reclaiming, in the linked list of the inactive memory pages and in ascending order of the set ranges of the write times, inactive memory pages of the NVM that are in one or multiple segments and in a quantity that matches the quantity of the memory pages requested to be reclaimed by the reclamation identifier.

2. A memory reclamation apparatus, comprising:
a receiving module (601), configured to receive (101) a memory reclamation request message, wherein the memory reclamation request message comprises a reclamation identifier, and the reclamation identifier is used to indicate a quantity of memory pages requested to be reclaimed;
**characterised in that** the apparatus further comprises:
a memory reclamation module (602), configured to reclaim (102) inactive memory pages of a non-volatile memory, NVM, according to the reclamation identifier in ascending order of the write times of inactive memory pages of the NVM;
a determining module, configured to determine the write times of inactive memory pages of the NVM before the memory reclamation module reclaims the inactive memory pages of the NVM according to the reclamation identifier in ascending order of writes times of the inactive memory pages of the NVM; and
a first inserting module, configured to store the inactive memory pages of the NVM into a corresponding segment of a linked list of the inactive memory pages according to the write times of inactive memory pages of the NVM, wherein the linked list of the inactive memory pages comprises multiple segments, and each segment is used to store an inactive memory page of the NVM within a set range of the write times;
wherein the multiple segments comprised in the linked list of the inactive memory pages are sorted in the linked list of the inactive memory pages in ascending order of corresponding set ranges of the write times; and wherein,
the memory reclamation module (602) is specifically configured to reclaim, in the linked list of the inactive memory pages and in ascending order of the set ranges of the write times, inactive memory pages of the NVM that are in one or multiple segments and in a quantity that matches the quantity of the memory pages requested to be reclaimed by the reclamation identifier.

## Patentansprüche

1. Speicherrückgewinnungsverfahren, das Folgendes umfasst:
Empfangen (101) einer Speicherrückgewinnungsanforderungsnachricht, wobei die Speicherrückgewinnungsanforderungsnachricht eine Rückgewinnungskennung umfasst und die Rückgewinnungskennung verwendet wird, um eine Menge an zur Rückgewinnung angeforderten Speicherseiten anzugeben;
**dadurch gekennzeichnet, dass** das Verfahren ferner Folgendes umfasst:
Zurückgewinnen (102) inaktiver Speicherseiten eines nichtflüchtigen Speichers bzw. NVM ("Non-Volatile Memory") gemäß der Rückgewinnungskennung in aufsteigender Reihenfolge von Schreibzeiten inaktiver Speicherseiten des NVM,
bevor dem Zurückgewinnen (102) inaktiver Speicherseiten eines NVM gemäß der Rückgewinnungskennung in aufsteigender Reihenfolge der Schreibzeiten inaktiver Speicherseiten des NVM,
Bestimmen der Schreibzeiten inaktiver Speicherseiten des NVM; und
Speichern der inaktiven Speicherseiten des NVM in ein entsprechendes Segment einer verknüpften Liste der inaktiven Speicherseiten gemäß den Schreibzeiten inaktiver Speicherseiten des NVM, wobei die verknüpfte Liste der inaktiven Speicherseiten mehrere Segmente umfasst und jedes Segment zum Speichern einer inaktiven Speicherseite des NVM innerhalb eines festgelegten Bereichs der Schreibzeiten verwendet wird;
wobei die mehreren Segmente, die in der verknüpften Liste der inaktiven Speicherseiten enthalten sind, in der verknüpften Liste der inaktiven Speicherseiten in aufsteigender Reihenfolge von entsprechend festgelegten Bereichen der Schreibzeiten sortiert sind; und
wobei das Zurückgewinnen (102) inaktiver Speicherseiten eines NVM gemäß der Rückgewinnungskennung in aufsteigender Reihenfolge der Schreibzeiten inaktiver Speicherseiten des NVM Folgendes umfasst:
Zurückgewinnen, in der verknüpften Liste der inaktiven Speicherseiten und in aufsteigender Reihenfolge der festgelegten Bereiche der Schreibzeiten, inaktiver Speicherseiten des NVM, die sich in einem oder mehreren Segmenten befinden und in einer Menge vorliegen, die mit der Menge der durch die Rückgewinnungskennung zur Rückgewinnung angeforderten Speicherseiten übereinstimmt.

2. Speicherrückgewinnungsvorrichtung, die Folgendes umfasst:
ein Empfangsmodul (601), das ausgelegt ist zum Empfangen (101) einer Speicherrückgewinnungsanforderungsnachricht, wobei die Speicherrückgewinnungsanforderungsnachricht eine Rückgewinnungskennung umfasst und die Rückgewinnungskennung verwendet wird, um eine Menge an zur Rückgewinnung angeforderten Speicherseiten anzugeben;
**dadurch gekennzeichnet, dass** die Vorrichtung ferner Folgendes umfasst:
ein Speicherrückgewinnungsmodul (602), das ausgelegt ist zum Zurückgewinnen (102) inaktiver Speicherseiten eines nichtflüchtigen Speichers bzw. NVM ("Non-Volatile Memory") gemäß der Rückgewinnungskennung in aufsteigender Reihenfolge der Schreibzeiten inaktiver Speicherseiten des NVM;
ein Bestimmungsmodul, das ausgelegt ist zum Bestimmen der Schreibzeiten inaktiver Speicherseiten des NVM, bevor das Speicherrückgewinnungsmodul die inaktiven Speicherseiten des NVM gemäß der Rückgewinnungskennung in aufsteigender Reihenfolge von Schreibzeiten der inaktiven Speicherseiten des NVM zurückgewinnt; und
ein erstes Einfügemodul, das ausgelegt ist zum Speichern der inaktiven Speicherseiten des NVM in ein entsprechendes Segment einer verknüpften Liste der inaktiven Speicherseiten gemäß den Schreibzeiten inaktiver Speicherseiten des NVM, wobei die verknüpfte Liste der inaktiven Speicherseiten mehrere Segmente umfasst und jedes Segment zum Speichern einer inaktiven Speicherseite des NVM innerhalb eines festgelegten Bereichs der Schreibzeiten verwendet wird;
wobei die mehreren Segmente, die in der verknüpften Liste der inaktiven Speicherseiten enthalten sind, in der verknüpften Liste der inaktiven Speicherseiten in aufsteigender Reihenfolge von entsprechend festgelegten Bereichen der Schreibzeiten sortiert sind; und wobei
das Speicherrückgewinnungsmodul (602) spezifisch ausgelegt ist zum Zurückgewinnen, in der verknüpften Liste der inaktiven Speicherseiten und in aufsteigender Reihenfolge der festgelegten Bereiche der Schreibzeiten, inaktiver Speicherseiten des NVM, die sich in einem oder mehreren Segmenten befinden und in einer Menge vorliegen, die mit der Menge der durch die Rückgewinnungskennung zur Rückgewinnung angeforderten Speicherseiten übereinstimmt.

## Revendications

1. Procédé de récupération de mémoire, comprenant :
la réception (101) d'un message de demande de récupération de mémoire, le message de demande de récupération de mémoire comprenant un identifiant de récupération, et
l'identifiant de récupération étant utilisé pour indiquer une quantité de pages mémoire dont la récupération est demandée ;
le procédé étant **caractérisé en ce qu'**il comprend en outre :
la récupération (102) de pages mémoire inactives d'une mémoire non volatile, NVM, en fonction de l'identifiant de récupération, dans un ordre ascendant d'heures d'écriture de pages mémoire inactives de la NVM ;
avant la récupération (102) de pages mémoire inactives d'une NVM en fonction de l'identifiant de récupération dans un ordre ascendant des heures d'écriture des pages mémoire inactives de la NVM,
la détermination des heures d'écriture de pages mémoire inactives de la NVM ; et
le stockage des pages mémoire inactives de la NVM dans un segment correspondant d'une liste liée des pages mémoire inactives en fonction des heures d'écriture de pages mémoire inactives de la NVM, la liste liée des pages mémoire inactives comprenant de multiples segments, et chaque segment étant utilisé pour stocker une page mémoire inactive de la NVM dans une plage définie des heures d'écriture ;
les multiples segments compris dans la liste liée des pages mémoire inactives étant triés dans la liste liée des pages mémoire inactives dans un ordre ascendant de plages définies correspondantes des heures d'écriture ; et
la récupération (102) de pages mémoire inactives d'une NVM en fonction de l'identifiant de récupération dans un ordre ascendant des heures d'écriture de pages mémoire inactives de la NVM comprenant :
la récupération, dans la liste liée des pages mémoire inactives et dans un ordre ascendant des plages définies des heures d'écriture, de pages mémoire inactives de la NVM qui se trouvent dans un ou plusieurs segments et en une quantité qui correspond à la quantité des pages mémoire dont la récupération est demandée par l'identifiant de récupération.

2. Appareil de récupération de mémoire, comprenant :
un module de réception (601), configuré pour recevoir (101) un message de demande de récupération de mémoire, le message de demande de récupération de mémoire comprenant un identifiant de récupération, et l'identifiant de récupération étant utilisé pour indiquer une quantité de pages mémoire dont la récupération est demandée ;
l'appareil étant **caractérisé en ce qu'**il comprend en outre :
un module de récupération de mémoire (602), configuré pour récupérer (102) des pages mémoire inactives d'une mémoire non volatile, NVM, en fonction de l'identifiant de récupération dans un ordre ascendant des heures d'écriture de pages mémoire inactives de la NVM ;
un module de détermination, configuré pour déterminer les heures d'écriture de pages mémoire inactives de la NVM avant que le module de récupération de mémoire ne récupère les pages mémoire inactives de la NVM en fonction de l'identifiant de récupération dans un ordre ascendant d'heures d'écriture des pages mémoire inactives de la NVM ; et
un premier module d'insertion, configuré pour stocker les pages mémoire inactives de la NVM dans un segment correspondant d'une liste liée des pages mémoire inactives en fonction des heures d'écriture de pages mémoire inactives de la NVM, la liste liée des pages mémoire inactives comprenant de multiples segments, et chaque segment étant utilisé pour stocker une page mémoire inactive de la NVM dans une plage définie des heures d'écriture ;
les multiples segments compris dans la liste liée des pages mémoire inactives étant triés dans la liste liée des pages mémoire inactives dans un ordre ascendant de plages définies correspondantes des heures d'écriture ; et
le module de récupération de mémoire (602) étant spécifiquement configuré pour récupérer, dans la liste liée des pages mémoire inactives et dans un ordre ascendant des plages définies des heures d'écriture, des pages mémoire inactives de la NVM qui se trouvent dans un ou plusieurs segments et en une quantité qui correspond à la quantité des pages mémoire dont la récupération est demandée par l'identifiant de récupération.
